# EUROPEAN PATENT APPLICATION

(11) **EP 4 800 772 A1**
(43) Date of publication of application: **02.09.2026**
(21) Application number: 24882425.2
(22) Date of filing: 23.10.2024
(51) Int. Cl.: H01M 4/58, C01B 25/45

(54) **METHOD FOR MANUFACTURING POSITIVE ELECTRODE MATERIAL FOR LITHIUM-ION SECONDARY BATTERY**

(30) Priority: 25.10.2023 JP 2023183375
(71) Applicant: KABUSHIKI KAISHA TOYOTA JIDOSHOKKI, Kariya-shi, Aichi 448-8671 (JP)
(72) Inventor: EGUCHI Tatsuya, Kariya-shi, Aichi 448-8671 (JP); HARATA Masanori, Kariya-shi, Aichi 448-8671 (JP); MATSUSHIRO Dai, Kariya-shi, Aichi 448-8671 (JP); KIMIJIMA Takeshi, Kariya-shi, Aichi 448-8671 (JP); FUKUNAGA Ryo, Kariya-shi, Aichi 448-8671 (JP); YAMAMOTO Yusuke, Kariya-shi, Aichi 448-8671 (JP); YOSHIDA Shuhei, Kariya-shi, Aichi 448-8671 (JP); MAKI Takeshi, Kariya-shi, Aichi 448-8671 (JP)
(74) Representative: TBK
(86) International application number: PCT/JP2024/037819
(87) International publication number: WO 2025/089314

(57) **Abstract**

This method for manufacturing a positive electrode material for a lithium-ion rechargeable battery includes: a slurry preparation step (S10) in which a precursor slurry is obtained; a granulation step (S20) in which precursor particles are obtained from the precursor slurry; and a sintering step (S30) in which the precursor particles are sintered. The precursor slurry includes lithium phosphate, a manganese-containing phosphate compound, an iron oxide, and a dispersion medium such that the proportion of the mole ratio of manganese relative to the total of the mole ratio of manganese and the mole ratio of iron is at least 70% and no greater than 90%. The manganese-containing phosphate compound is Mn54, Mn32, or a mixture thereof. **In** the slurry preparation step (S10), a pulverization step (S11) is performed in which the lithium phosphate and the manganese-containing phosphate compound are pulverized together with the iron oxide.

## Description

### TECHNICAL FIELD

The present disclosure relates to a method for manufacturing a positive electrode material for lithium-ion rechargeable batteries.

### BACKGROUND ART

Patent Literature 1 discloses a power storage device including a positive electrode that uses olivine-type lithium iron phosphate (LiFePO₄) as a positive electrode active material. Olivine-structured active materials typified by olivine-type lithium iron phosphate are known to exhibit excellent thermal stability as positive electrode active materials.

### CITATION LIST

### Patent Literature

Patent Literature 1: JP2019-185920A

### SUMMARY OF INVENTION

### Technical Problem

Olivine-type lithium manganese iron phosphate (LiMnFePO₄) is a material in which a portion of the iron constituting olivine-type lithium iron phosphate is substituted with manganese. A positive electrode active material using olivine-type lithium manganese iron phosphate achieves a higher battery capacity than a positive electrode active material using olivine-type lithium iron phosphate. However, as the proportion of manganese in olivine-type lithium manganese iron phosphate increases, the diffusivity of lithium ions within the solid (hereinafter referred to as solid-state diffusion) decreases. As a result, when olivine-type lithium manganese iron phosphate is used as the positive electrode active material, the resistance of the positive electrode active material increases, which increases the resistance of the positive electrode.

The intraparticle resistance of a positive electrode active material has a positive correlation with the product of the solid-state diffusion of the material constituting the particle and the primary particle diameter of the particle. Accordingly, in the case of a positive electrode active material composed of granulated particles of olivine-type lithium manganese iron phosphate, it is considered that reducing the primary particle diameter of the granulated particles suppresses the increase in resistance caused by the inclusion of manganese.

### Solution to Problem

In one aspect of the present disclosure, a method for manufacturing a positive electrode material for a lithium-ion rechargeable battery includes: a slurry preparation step of obtaining a precursor slurry containing lithium phosphate, a manganese-containing phosphate compound, iron oxide, and a dispersion medium; a granulation step of obtaining precursor particles that are agglomerates by spray-drying the precursor slurry; and a calcination step of obtaining olivine-type lithium manganese iron phosphate by calcining the precursor particles. In the precursor slurry, a proportion of a molar ratio of manganese relative to a total of a molar ratio of manganese and a molar ratio of iron is in a range of 70% to 90%. The manganese-containing phosphate compound is Mn₅(HPO₄)₂(PO₄)₂(H₂O)₄, Mn₅(HPO₄)₂(PO₄)₂, Mn₃(PO₄)₂·3H₂O, Mn₃(PO₄)₂, or a mixture thereof. The slurry preparation step includes a pulverization step of pulverizing the manganese-containing phosphate compound together with the iron oxide.

In the above-described method for manufacturing a positive electrode material for a lithium-ion rechargeable battery, the slurry preparation step includes: a first reaction of producing the lithium phosphate by reacting a lithium compound with phosphoric acid in the dispersion medium; and a second reaction of producing the manganese-containing phosphate compound by reacting a manganese compound with phosphoric acid in the dispersion medium.

In the above-described method for manufacturing a positive electrode material for a lithium-ion rechargeable battery, in the slurry preparation step, after the first reaction and after the second reaction, the lithium phosphate and the manganese-containing phosphate compound are mixed with the iron oxide.

In the above-described method for manufacturing a positive electrode material for a lithium-ion rechargeable battery, at least one of the first reaction or the second reaction is a reaction accompanied by generation of carbon dioxide gas. After the first reaction and after the second reaction, the lithium phosphate and the manganese-containing phosphate compound are mixed with at least one component other than the lithium phosphate and the manganese-containing phosphate compound that are contained in the precursor slurry.

In the above-described method for manufacturing a positive electrode material for a lithium-ion rechargeable battery, in the first reaction, a metal compound other than lithium is added. An amount of the metal compound added is such that: a ratio (Li/MA) of a molar ratio of lithium (Li) to a total molar ratio (MA) of metal components constituting the metal compound is in a range of 1.0 to 1.1; and a ratio (P/MA) of a molar ratio of phosphorus (P) to the total molar ratio (MA) of the metal components constituting the metal compound is in a range of 1.0 to 1.1.

In the above-described method for manufacturing a positive electrode material for a lithium-ion rechargeable battery, the precursor slurry contains a carbon source.
In the above-described method for manufacturing a positive electrode material for a lithium-ion rechargeable battery, the precursor slurry contains a carboxylic acid. The pulverization step is performed in a presence of the carboxylic acid.

In the above-described method for manufacturing a positive electrode material for a lithium-ion rechargeable battery, the precursor slurry contains a titanium compound.
In the above-described method for manufacturing a positive electrode material for a lithium-ion rechargeable battery, the precursor slurry contains a magnesium compound.

### Advantageous Effects of Invention

According to the present invention, it is possible to obtain granulated particles of olivine-type lithium manganese iron phosphate having a high manganese proportion and a small primary particle diameter.

### BRIEF DESCRIPTION OF DRAWINGS

[Fig. 1] A micrograph showing a cross-sectional view of granulated particles.
[Fig. 2] A schematic diagram illustrating the structure of primary particles in a cross section of the granulated particles.
[Fig. 3] A flowchart illustrating a method for manufacturing a positive electrode material.

### DESCRIPTION OF EMBODIMENTS

An embodiment of the present invention will now be described with reference to the drawings. Hereinafter, the positive electrode material for a lithium-ion rechargeable battery and an electrode of a lithium-ion rechargeable battery may be referred to simply as a positive electrode material and an electrode, respectively.

### Positive Electrode Material

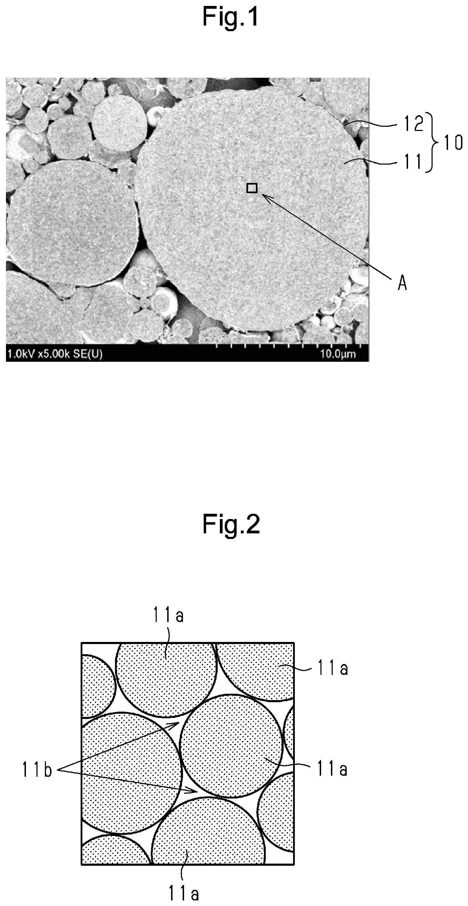

With reference to Figs. 1 and 2, a positive electrode material manufactured by a manufacturing method of the present embodiment will be described. The positive electrode material is employed, for example, as a positive electrode active material in a positive electrode for a lithium-ion rechargeable battery, and is capable of absorbing and releasing charge carriers such as lithium ions.

The positive electrode material includes granulated particles 10 composed of olivine-type lithium manganese iron phosphate (hereinafter referred to as LMFP). The positive electrode material may be composed only of the granulated particles, or may further include components other than the granulated particles 10.

One example of the granulated particles 10 illustrated in Fig. 1 includes a core 11 composed of LMFP and a carbon coating 12 formed on a surface of the core 11.

The LMFP forming the core 11 is a polyanion-based compound having an olivine crystal structure and represented by a general formula LiₐMnₓFe_{y}Me_{z}PO₄. In the general formula LiₐMnₓFe_{y}Me_{z}PO₄, Me represents at least one element selected from the group consisting of Co, Ni, Cu, Mg, Zn, V, Ca, Sr, Ba, Ti, Al, Si, B, Te, and Mo.

In the general formula LiₐMnₓFe_{y}Me_{z}PO₄, a, x, y, and z satisfy 0 < a < 2, 0 < x + y + z < 2, 0.7 ≤ x/(x + y) ≤ 0.9, 0.1 ≤ y/(x + y) ≤ 0.3, and 0 ≤ z ≤ 0.1. The value a preferably satisfies (x + y + z) ≤ a ≤ 1.1(x + y + z).

Further, when the molar ratio of P constituting the polyanion-based compound having an olivine crystal structure represented by the general formula LiₐMnₓFe_{y}Me_{z}PO₄ is denoted as b, the variables b, x, y, and z preferably satisfy (x + y + z) ≤ b ≤ 1.1(x + y + z). In other words, the variables x, y, and z preferably satisfy 1/1.1 ≤ x + y + z ≤ 1.

Specific examples of ranges of the variables x, y, and z when z = 0 include a case in which x + y = 1, 0.7 ≤ x ≤ 0.9, and 0.1 ≤ y ≤ 0.3. Specific examples of ranges of the variables x, y, and z when z ≠ 0 include a case in which 0.9 ≤ x + y < 1, 0.63 ≤ x < 0.9, 0.09 ≤ y < 0.3, and 0 < z ≤ 0.1. The LMFP preferably contains at least one of Mg and Ti as the element constituting Me. The olivine-type lithium manganese iron phosphate constituting the core 11 may be of a single type or of two or more types.

Fig. 2 schematically illustrates a structure of a region indicated by arrow A in Fig. 1. As illustrated in Fig. 2, the core 11 has a structure in which primary particles 11a of LMFP are agglomerated. The core 11 also has pores 11b formed between a plurality of the primary particles 11a.

A particle diameter of the primary particles 11a is, for example, 100 nm or less, preferably 70 nm or less, and more preferably 50 nm or less. The particle diameter of the primary particles 11a is, for example, 20 nm or more. The particle diameter of the primary particles 11a is a value obtained by small-angle X-ray scattering (SAXS). Specifically, the particle diameter of the primary particles 11a is defined as an average particle diameter (D50) obtained from a particle diameter distribution of the primary particles 11a assuming the primary particles 11a to be spherical. Unless otherwise specified, particle diameter values described below are values obtained by the same small-angle X-ray scattering method.

A pore volume of the core 11 is not particularly limited, but is preferably small. The pore volume of the core 11 is, for example, 0.24 cm³/g or less, preferably 0.2 cm³/g or less, and more preferably 0.15 cm³/g or less. The pore volume is, for example, greater than or equal to 0.05 cm³/g. The pore volume can be determined by performing nitrogen adsorption-desorption measurement on the granulated particles 10 and analyzing the measurement results by a Barrett-Joyner-Halenda (BJH) method. The pore volume refers to a total pore volume in a range in which a pore diameter is 300 nm or less.

A carbon content in the granulated particles 10 is, for example, 1.8 mass% or more, preferably 1.9 mass% or more, and more preferably 2.0 mass% or more. The carbon content is, for example, 3.0 mass% or less, and preferably 2.7 mass% or less. The carbon content can be measured using a carbon-sulfur analyzer (CS analyzer). The carbon coating 12 of the granulated particles 10 may be omitted.

A content of LMFP in the granulated particles 10 is, for example, 95 mass% or more, and preferably 96 mass% or more. The content is, for example, 99 mass% or less, and preferably 98 mass% or less.

The granulated particles 10 may contain components other than LMFP and carbon. In this case, a content of the other components is, for example, 2 mass% or less.

An average particle diameter (D50) of the granulated particles 10 is, for example, 3.0 µm or more, and preferably 5.0 µm or more. The average particle diameter (D50) of the granulated particles 10 is, for example, 30 µm or less, and preferably 20 µm or less. The average particle diameter of the granulated particles 10 can be measured, for example, using a laser diffraction particle diameter analyzer.

### Method for Manufacturing Positive Electrode Material

Next, a method for manufacturing a positive electrode material will be described.

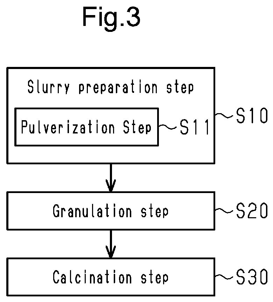

As illustrated in Fig. 3, a method for manufacturing the granulated particles 10 serving as a positive electrode material includes a slurry preparation step S10, a granulation step S20, and a calcination step S30. The granulated particles 10 are manufactured by sequentially undergoing the slurry preparation step S10, the granulation step S20, and the calcination step S30.

### Slurry Preparation Step

The slurry preparation step S10 is a step of obtaining a precursor slurry containing lithium phosphate, a manganese-containing phosphate compound, iron oxide, and a dispersion medium. The slurry preparation step S10 includes a pulverization step S11, in which lithium phosphate and the manganese-containing phosphate compound are pulverized together with the iron oxide.

First, components contained in the precursor slurry obtained by the slurry preparation step S10 will be described. The components that may be contained in the precursor slurry can be broadly classified into components forming LMFP, a dispersion medium, and other components.

### [Components for Forming LMFP]

Lithium phosphate (Li₃PO₄) is an Li source for forming LMFP.

Lithium phosphate may be a commercially available product, or may be generated in the slurry preparation step S10. Lithium phosphate can be generated, for example, by reacting a lithium-containing compound with phosphoric acid (hereinafter referred to as a first reaction). Details of the first reaction will be described later.

The manganese-containing phosphate compound serves as an Mn source and a phosphate source for forming LMFP. The manganese-containing phosphate compound is Mn₅(HPO₄)₂(PO₄)₂(H₂O)₄, Mn₅(HPO₄)₂(PO₄)₂, Mn₃(PO₄)₂·3H₂O, Mn₃(PO₄)₂, or a mixture thereof.

Mn₅(HPO₄)₂(PO₄)₂ is an anhydride obtained by removing water molecules constituting a hydrate from Mn₅(HPO₄)₂(PO₄)₂(H₂O)₄. Hereinafter, Mn₅(HPO₄)₂(PO₄)₂ and Mn₅(HPO₄)₂(PO₄)₂(H₂O)₄ may be collectively referred to as Mn54. Mn₃(PO₄)₂ is an anhydride obtained by removing water molecules constituting a hydrate from Mn₃(PO₄)₂·3H₂O. Hereinafter, Mn₃(PO₄)₂·3H₂O and Mn₃(PO₄)₂ may be collectively referred to as Mn32.

The manganese-containing phosphate compound is preferably Mn54. When the manganese-containing phosphate compound is Mn54, generation of byproducts such as LiH₂PO₄ can be suppressed as compared with a case in which the compound is Mn32. In addition, when present as a hydrate, Mn54 has a smaller proportion of water molecules constituting the hydrate than Mn32. Accordingly, when Mn54 is used, the amount of water volatilized in the calcination step S30 is reduced. As a result, granulated particles 10 having a small pore volume can be obtained. Further, when Mn54 is used, a primary particle diameter of the granulated particles 10 is made smaller based on a smaller crystal grain size. Details of this point will be described later.

The manganese-containing phosphate compound may be a commercially available product, or may be generated in the slurry preparation step S10. The manganese-containing phosphate compound can be generated, for example, by reacting a manganese-containing compound with phosphoric acid (hereinafter referred to as a second reaction). Details of the second reaction will be described later.

The iron oxide serves as an Fe source for forming LMFP and is also a component included to pulverize the manganese-containing phosphate compound more finely in the pulverization step S11. As the iron oxide, a material harder than the manganese-containing phosphate compound is selected. Since the Mohs hardness of Mn54 and Mn32, which are manganese-containing phosphate compounds, is 5, a material having a Mohs hardness greater than 5 is selected as the iron oxide. Examples of the iron oxide include Fe₂O₃ (Mohs hardness: 5.5) and Fe₃O₄ (Mohs hardness: 6.0). The iron oxide contained in the precursor slurry may be a single type or two or more types.

The precursor slurry may further contain, as needed, a metal source for forming Me in LMFP represented by the general formula LiₐMnₓFe_{y}Me_{z}PO₄ (hereinafter referred to as an optional metal source). Examples of the optional metal source include a Co source, a Ni source, a Cu source, a Mg source, a Zn source, a V source, a Ca source, a Sr source, a Ba source, a Ti source, an Al source, a Si source, a B source, a Te source, and a Mo source. Specific examples of the optional metal source include metal oxides, metal hydroxides, and metal salts of various metal elements. The optional metal source is preferably a metal oxide. In this case, volume shrinkage during calcination in the calcination step S30 is suppressed. The optional metal source contained in the precursor slurry may be a single type or two or more types.

The precursor slurry preferably contains a Mg source as the optional metal source. In this case, resistance of the granulated particles 10 is reduced. Examples of the Mg source include magnesium compounds such magnesium oxide, magnesium acetate, magnesium carbonate, and magnesium hydroxide. The Mg source is preferably magnesium oxide. In this case, volume shrinkage during calcination in the calcination step S30 is suppressed.

The precursor slurry preferably contains a Ti source as the optional metal source. In this case, the primary particle diameter of the granulated particles 10 is further reduced. Examples of the Ti source include titanium compounds such as titanium oxide and titanium nitride. The Ti source is preferably titanium oxide. In this case, volume shrinkage during calcination in the calcination step S30 is suppressed.

The contents of the lithium phosphate, the manganese-containing phosphate compound, the iron oxide, and the optional metal source in the precursor slurry are adjusted such that molar ratios of respective metal elements satisfy specific relationships.

The manganese-containing phosphate compound and the iron oxide are present in amounts such that the proportion of the molar ratio of manganese relative to the total of the molar ratio of manganese and the molar ratio of iron in the precursor slurry, is in a range of 70% to 90%. The proportion of the molar ratio of manganese is preferably 75% or more, and more preferably 78% or more. The proportion of the molar ratio of manganese is preferably 85% or less, and more preferably 83% or less.

The content of lithium phosphate is preferably set such that the ratio (Li/T) of the molar ratio of lithium (Li) relative to the total molar ratio (T) of specific metal elements in the precursor slurry is in a range of 1.00 to 1.10. The specific metal elements are manganese contained in the manganese-containing phosphate compound, iron contained in the iron oxide, and metal elements contained in the optional metal source. In other words, the specific metal elements are metal elements constituting Mn, Fe, and Me in LMFP represented by the general formula LiₐMnₓFe_{y}Me_{z}PO₄.

When the Mg source is included, the content of the Mg source is, for example, an amount such that the ratio (Mg/T) of the molar ratio of magnesium (Mg) relative to the total molar ratio (T) of the specific metal elements in the precursor slurry is in a range of 0.0001 to 0.05. The proportion of the molar ratio of magnesium is preferably 0.005 or more, and more preferably 0.01 or more. The proportion of the molar ratio of magnesium is preferably 0.045 or less, and more preferably 0.04 or less.

When the Ti source is included, the content of the Ti source is, for example, an amount such that the ratio (Ti/T) of the molar ratio of titanium (Ti) relative to the total molar ratio (T) of the specific metal elements in the precursor slurry is in a range of 0.0001 to 0.005. The proportion of the molar ratio of titanium is preferably 0.005 or more, and more preferably 0.01 or more. The proportion of the molar ratio of titanium is preferably 0.045 or less, and more preferably 0.04 or less.

In the precursor slurry, each of the components forming LMFP is contained in a powder state.

The particle diameter of lithium phosphate contained in the precursor slurry is, for example, 50 nm or less, preferably 40 nm or less, and more preferably 30 nm or less. The particle diameter of lithium phosphate is, for example, 5 nm or more. The lithium phosphate is converted into a powder having the above particle diameter by undergoing a pulverization step described later.

The particle diameter of the manganese-containing phosphate compound contained in the precursor slurry is, for example, 100 nm or less, preferably 70 nm or less, and more preferably 50 nm or less. The particle diameter of the manganese-containing phosphate compound is, for example, 10 nm or more. The manganese-containing phosphate compound is converted into a powder having the above particle diameter by undergoing a pulverization step described later.

The particle diameter of the iron oxide contained in the precursor slurry is, for example, 100 nm or less, preferably 70 nm or less, and more preferably 50 nm or less. The particle diameter of the iron oxide is, for example, 10 nm or more. The iron oxide is converted into a powder having the above particle diameter by undergoing a pulverization step described later.

The particle diameter of the optional metal source contained in the precursor slurry is, for example, 300 nm or less, preferably 200 nm or less, and more preferably 100 nm or less. The particle diameter of the optional metal source is, for example, 10 nm or more.

### [Dispersion Medium]

The dispersion medium is water, or a mixed solvent of water and a non-aqueous solvent. The water is not particularly limited, but is preferably, for example, ion-exchanged water treated with an ion-exchange resin, or ultrapure water treated by a reverse osmosis water purification system. Examples of the non-aqueous solvent constituting the mixed solvent include water-miscible solvents such as lower alcohols, acetone, tetrahydrofuran, ethylene glycol, N-methyl-2-pyrrolidone, dimethylformamide, dimethylacetamide, acetonitrile, and dimethyl sulfoxide. The non-aqueous solvent may be used alone, or two or more non-aqueous solvents may be used in combination. The volume proportion of water in the mixed solvent is preferably, for example, in a range of 50 vol% to 99.9 vol%, and more preferably in a range of 60 vol% to 99 vol%. The content of the aqueous solvent in the precursor slurry is not particularly limited, but is, for example, an amount such that a solid content ratio is in a range of 20 mass% to 50 mass%.

### [Other Components]

The precursor slurry may further contain a carbon source for forming the carbon coating 12. As the carbon source, for example, an organic compound can be used. Examples of the organic compound include glucose, fructose, galactose, mannose, maltose, sucrose, lactose, glycogen, pectin, alginic acid, glucomannan, chitin, hyaluronic acid, chondroitin, agarose, polyether, polyhydric alcohol, polyvinyl alcohol, polyvinylpyrrolidone, cellulose, starch, gelatin, carboxymethyl cellulose, methyl cellulose, hydroxymethyl cellulose, hydroxyethyl cellulose, polyacrylic acid, polystyrene sulfonic acid, polyacrylamide, and polyvinyl acetate. Examples of the polyhydric alcohol include polyethylene glycol, polypropylene glycol, polyglycerin, and glycerin. The carbon source may be used alone, or two or more carbon sources may be used in combination.

The content of the carbon source in the precursor slurry is set such that the mass of carbon contained in the carbon source (when carboxylic acid described later is included, the total mass including the mass of carbon contained in carboxylic acid) becomes a specific amount. The content of the carbon source is, for example, an amount in a range of 3 parts by mass to 30 parts by mass, when the total mass of components forming LMFP in the precursor slurry is taken as 100 parts by mass.

The precursor slurry may further contain a carboxylic acid as an optional component. In this case, the pore volume of the granulated particles 10 is reduced. Details thereof will be described later in a section describing the pulverization step.

Examples of the carboxylic acid include citric acid, formic acid, acetic acid, propionic acid, butyric acid, pentanoic acid, malic acid, fumaric acid, tartaric acid, ascorbic acid, gluconic acid, and polyacrylic acid. The carboxylic acid may be used alone, or two or more carboxylic acids may be used in combination. Among these carboxylic acids, citric acid is preferably used.

The content of the carboxylic acid in the precursor slurry is, for example, an amount in a range of 1 part by mass to 30 parts by mass, when the total mass of the components forming LMFP in the precursor slurry is taken as 100 parts by mass.

The precursor slurry may further contain, as necessary, components other than those described above. Examples of such components include dispersants.

### [Pulverization Step]

The pulverization step S11 is performed on a slurry containing lithium phosphate, a manganese-containing phosphate compound, iron oxide, and a dispersion medium (hereinafter referred to as an intermediate slurry). The pulverization step S11 is a step of pulverizing and reducing the particle diameter of solid components contained in the intermediate slurry, namely lithium phosphate, the manganese-containing phosphate compound, and iron oxide.

A pulverization method used in the pulverization step S11 is not particularly limited, provided that the method causes collisions between solid components in the intermediate slurry. Examples of the pulverization method include methods using a pulverizer such as a bead mill, a hammer mill, a stirring mill, a jet mill, or a ball mill. Among these pulverization methods, a pulverization method in which particles are fractured by applying shear force, such as a method using a bead mill, is preferable. When a bead mill is used, beads serving as media particles are harder than the solid components contained in the intermediate slurry, for example, harder than iron oxide. The bead diameter is, for example, 1 mm or less, preferably 0.5 mm or less, and for example, 0.1 mm or more. The temperature during pulverization is, for example, in a range of 10°C to 50°C.

The particle diameters of the respective solid components contained in the intermediate slurry before the pulverization step S11 are as follows. The particle diameter of lithium phosphate is, for example, in a range of 50 nm to 50 µm. The particle diameter of the manganese-containing phosphate compound is, for example, in a range of 50 nm to 50 µm. The particle diameter of iron oxide is, for example, in a range of 50 nm to 10 µm.

The particle diameters of the respective solid components contained in the intermediate slurry after the pulverization step S11 are, as values in a state in which particles of lithium phosphate, the manganese-containing phosphate compound, and iron oxide are mixed, for example, 100 nm or less, preferably 70 nm or less, and more preferably 50 nm or less. The above values are, for example, 10 nm or more.

In the pulverization step S11, lithium phosphate and the manganese-containing phosphate compound are pulverized together with iron oxide in the dispersion medium. In this case, based on the difference between the hardnesses of the lithium phosphate and the manganese-containing phosphate compound and the hardness of iron oxide, the lithium phosphate and the manganese-containing phosphate compound, in particular the manganese-containing phosphate compound, are pulverized more finely.

Specifically, the Mohs hardness of lithium phosphate is 4, and the Mohs hardnesses of Mn54 and Mn32, which are manganese-containing phosphate compounds, are 5. In contrast, the Mohs hardness of iron oxide (Fe₂O₃) is 5.5, and iron oxide is harder than lithium phosphate and the manganese-containing phosphate compound. In this case, lithium phosphate and the manganese-containing phosphate compound are pulverized more finely by performing two-stage pulverization in the pulverization step S11.

Specifically, as a first step, shear force, compressive force, and the like generated in a pulverizer such as a bead mill act on respective solid components in the intermediate slurry, so that lithium phosphate, the manganese-containing phosphate compound, and iron oxide are pulverized. Subsequently, as pulverization processing continues, collisions between the pulverized solid components occur as a second step. At this time, pulverized products of relatively hard iron oxide collide with relatively soft lithium phosphate and the manganese-containing phosphate compound, so that pulverized products of lithium phosphate and the manganese-containing phosphate compound are further finely pulverized. In the pulverization step S11, the first step and the second step described above are performed in parallel or simultaneously.

In the pulverization step S11, lithium phosphate, the manganese-containing phosphate compound, and iron oxide are divided along crystal grain boundaries. Therefore, in theory, each particle after pulverization has a size corresponding to a unit of a crystal grain, and a theoretical minimum size corresponds to the particle diameter of the crystal grain. Accordingly, the smaller the constituent crystal grains are, the more finely the material can be pulverized. In the case of the manganese-containing phosphate compound, Mn54 has a smaller particle diameter of crystal grains forming a phase than Mn32. Therefore, since finer pulverization is achieved, the manganese-containing phosphate compound is preferably Mn54.

Components other than lithium phosphate, the manganese-containing phosphate compound, iron oxide, and the dispersion medium may be mixed in advance into the intermediate slurry to be subjected to the pulverization step S11, or may be mixed into the intermediate slurry after the pulverization step S11. Alternatively, a portion of components other than lithium phosphate, the manganese-containing phosphate compound, iron oxide, and the dispersion medium may be mixed in advance into the intermediate slurry to be subjected to the pulverization step S11, and the remaining portion of the components may be mixed into the intermediate slurry after the pulverization step S11. The components other than lithium phosphate, the manganese-containing phosphate compound, iron oxide, and the dispersion medium may be mixed after being pulverized in advance to have a specified particle diameter, or may be pulverized in the pulverization step to have a specified particle diameter.

The intermediate slurry preferably contains a carboxylic acid. In other words, the pulverization step S11 is preferably performed in the presence of a carboxylic acid. In this case, the pore volume of the granulated particles 10 is reduced.

The above effect is considered to be attributable to a metal-capturing action of the carboxylic acid in the slurry. In the pulverization step S11, a portion of metals such as Li, Mn, and Fe is eluted into the slurry. When the eluted metals are captured by the carboxylic acid, dispersibility of the respective solid components in the slurry is improved. As a result, in the granulation step S20 and the calcination step S30 performed subsequently, primary particles are densely arranged, whereby the pore volume of the granulated particles 10 is reduced.

Accordingly, the carboxylic acid used in the intermediate slurry preferably has a high ability to capture eluted metals, particularly Li, Mn, and Fe. Table 1 below shows binding energies of various carboxylic acids to Li, Mn, and Fe. The binding energy values shown in Table 1 are values obtained as differences between energies before and after formation of complexes of each carboxylic acid with the corresponding eluted metal, and a smaller value indicates a higher ability to capture the corresponding eluted metal. The binding energy values shown in Table 1 are calculated using computer aided engineering (CAE). As shown in Table 1, citric acid exhibits the lowest binding energy with respect to any of the eluted metals Li, Mn, and Fe. Accordingly, citric acid is preferably used as the carboxylic acid.

**[Table 1]**

| | **Binding Energy (eV)** | | |
|---|---|---|---|
| | **Li** | **Mn** | **Fe** |
| **Citric Acid** | **1.5** | **2.0** | **1.1** |
| **Formic Acid** | **2.1** | **2.6** | **1.9** |
| **Acetic Acid** | **2.2** | **2.6** | **1.9** |
| **Malic Acid** | **2.1** | **2.5** | **1.9** |
| **Fumaric Acid** | **2.0** | **2.6** | **2.0** |
| **Tartaric Acid** | **1.8** | **2.5** | **1.9** |
| **Ascorbic Acid** | **2.2** | **2.9** | **2.3** |
| **Gluconic Acid** | **2.1** | **2.8** | **2.1** |
| **Polyacrylic Acid** | **2.0** | **2.9** | **2.1** |

When the intermediate slurry to be subjected to the pulverization step S11 contains all components other than the manganese-containing phosphate compound, the iron oxides, and the dispersion medium, a precursor slurry is obtained as the intermediate slurry after the pulverization step S11. When the intermediate slurry to be subjected to the pulverization step S11 does not contain all components other than the manganese-containing phosphate compound, iron oxide, and the dispersion medium, a precursor slurry is obtained by mixing the remaining components into the intermediate slurry after the pulverization step S11.

### [Specific Example of Method for Preparing Precursor Slurry]

Next, a specific example of the slurry preparation step S10 will be described.

First, lithium phosphate is generated by the first reaction, and the manganese-containing phosphate compound is generated by the second reaction.

Specifically, phosphoric acid is added dropwise, at normal pressure and at a temperature in a range of 0°C to 90°C, into a liquid in which a lithium-containing compound and a manganese-containing compound are dissolved or dispersed in a dispersion medium containing water. As a result, the lithium-containing compound reacts with the phosphoric acid to produce lithium phosphate (first reaction), and the manganese-containing compound reacts with the phosphoric acid to produce a manganese-containing phosphate compound (second reaction).

Components other than lithium phosphate and the manganese-containing phosphate compound contained in the precursor slurry may be added in advance to the liquid in which the first reaction and the second reaction are performed, or may be added to the reaction liquid after the first reaction and the second reaction. When iron oxide is added to the liquid in which the first reaction and the second reaction are performed, viscosity of the liquid increases and handling becomes difficult; therefore, iron oxide is preferably added after the first reaction and the second reaction.

Examples of the lithium-containing compound used in the first reaction include lithium hydroxide, lithium carbonate, and lithium oxide. The lithium-containing compound is preferably lithium hydroxide or lithium carbonate.

In the first reaction, by adjusting the ratio between the lithium-containing compound and phosphoric acid and a metal compound other than lithium, generation of by-products is suppressed and the yield of lithium phosphate is increased. Examples of the by-products include LiOH·H₂O and LiH₂PO₄. When such by-products are contained in the precursor slurry, the amount of water volatilized in the calcination step S30 increases, thereby increasing the pore volume of the granulated particles 10. In addition, LiH₂PO₄ may cause formation of coarse particles in the granulation step S20 and may adhere to various apparatuses used in manufacturing. Therefore, in the first reaction, it is preferable to reduce the amount of the by-products generated.

The metal compound other than lithium includes the manganese compound used in the second reaction, iron oxide, and the optional metal sources such as magnesium oxide and titanium oxide. In the first reaction, the amount of the metal compound other than lithium is an amount such that the ratio (Li/MA) of the molar ratio of lithium (Li) relative to the total molar ratio (MA) of metal components constituting the metal compound is in a range of 1.0 to 1.1, and the ratio (P/MA) of the molar ratio of phosphorus (P) relative to the total molar ratio (MA) of the metal components constituting the metal compound is in a range of 1.0 to 1.1. By adjusting the amount of the metal compound other than lithium added relative to the lithium-containing compound and phosphoric acid so as to satisfy the above conditions, generation of the above by-products is suppressed.

Examples of the manganese-containing compound used in the second reaction include manganese carbonate, manganese sulfate, and manganese oxalate. The manganese-containing compound is preferably manganese carbonate. By using manganese carbonate having a relatively small particle diameter compared with other manganese-containing compounds, the primary particle diameter of the granulated particles 10 is made smaller. When manganese sulfate is used, it is necessary to perform a post-treatment of washing the produced manganese-containing phosphate compound before the pulverization step S11 described later.

In the second reaction, the type of the manganese-containing phosphate compound produced can be controlled by adjusting the reaction temperature. When Mn54 is produced, the reaction temperature of the second reaction is preferably in a range of 60°C to 90°C. When Mn32 is produced, the reaction temperature of the second reaction is preferably 0°C or higher and lower than 60°C.

The first reaction and the second reaction may be performed sequentially in the same system instead of being performed simultaneously in the same system. For example, after phosphoric acid is added dropwise into a liquid in which one of the lithium-containing compound and the manganese-containing compound is dissolved or dispersed in the dispersion medium, the other of the lithium-containing compound and the manganese-containing compound is added to the reaction liquid. As a result, a reaction liquid containing lithium phosphate and the manganese-containing phosphate compound is obtained. Since adjustment of the component ratio for suppressing generation of by-products in the first reaction can be readily achieved, it is preferable to perform the first reaction and the second reaction simultaneously, or to perform the second reaction after the first reaction.

The first reaction and the second reaction may be performed separately in different systems. For example, after performing the first reaction and the second reaction in different systems, respectively, a reaction liquid after the first reaction and a reaction liquid after the second reaction are mixed. As a result, a reaction liquid containing lithium phosphate and the manganese-containing phosphate compound is obtained.

Next, iron oxide is mixed into the reaction liquid containing lithium phosphate and the manganese-containing phosphate compound to prepare an intermediate slurry. Further, as necessary, an optional metal source and other components are also mixed. For example, an Mg source and a Ti source as optional metal sources are mixed, and a carbon source and a carboxylic acid as other components are mixed. When the relevant components are added in advance in the first reaction and the second reaction, this step is omitted.

The optional metal source and other components may be mixed in advance into the reaction system in which the first reaction and the second reaction are performed, but are preferably mixed after each of the first reaction and the second reaction. When at least one of the first reaction and the second reaction is a reaction accompanied by generation of carbon dioxide gas, performing a step of mixing any component after each reaction promotes discharge of the generated carbon dioxide gas from the intermediate slurry. Carbon dioxide gas is generated, for example, when at least one of the lithium compound, the manganese compound, and the optional metal source is a carbonate.

Another specific example of a method for preparing the intermediate slurry will be described below. The specified temperature described in the following specific example can be adjusted. The specified temperature is, for example, in a range of 0°C to 90°C. In the second reaction, when Mn54 is produced, the specified temperature is preferably in a range of 60°C to 90°C, and when Mn32 is produced, the specified temperature is preferably 0°C or higher and lower than 60°C.

Specific Example 1 is an example in which a carboxylic acid is added simultaneously with phosphoric acid. First, a first slurry is prepared by dispersing a lithium-containing compound, a manganese-containing compound, iron oxide, and an optional metal source in a dispersion medium containing water. After phosphoric acid and a carboxylic acid are added to the first slurry heated to the specified temperature, a carbon source is added. Subsequently, the first slurry to which the phosphoric acid, the carboxylic acid, and the carbon source have been added is cooled to room temperature to obtain an intermediate slurry.

Specific Example 2 is an example in which a carboxylic acid is added before phosphoric acid is added. First, a first slurry is prepared by dispersing a lithium-containing compound, a manganese-containing compound, iron oxide, and an optional metal source in a dispersion medium containing water. After adding a carboxylic acid to the first slurry heated to the specified temperature, phosphoric acid is added, and thereafter a carbon source is added. Subsequently, the first slurry to which the phosphoric acid, the carboxylic acid, and the carbon source have been added is cooled to room temperature to obtain an intermediate slurry.

Specific Example 3 is an example in which a carboxylic acid is added in advance to a first slurry. First, the first slurry is prepared by dispersing a lithium-containing compound, a manganese-containing compound, iron oxide, an optional metal source, and a carboxylic acid in a dispersion medium containing water. After adding phosphoric acid to the first slurry heated to the specified temperature, a carbon source is added. Subsequently, the first slurry to which the phosphoric acid and the carbon source have been added is cooled to room temperature to obtain an intermediate slurry.

Specific Example 4 is an example in which a carbon source is added after cooling a slurry in which the first reaction and the second reaction have been performed by adding phosphoric acid. First, a first slurry is prepared by dispersing a lithium-containing compound, a manganese-containing compound, iron oxide, and an optional metal source in a dispersion medium containing water. Phosphoric acid and a carboxylic acid are added to the first slurry heated to the specified temperature. Subsequently, after cooling the first slurry to which the phosphoric acid and the carboxylic acid have been added to room temperature, a carbon source is added to the first slurry to obtain an intermediate slurry.

Specific Example 5 is an example in which the first reaction and the second reaction are performed in separate reaction systems. First, a first-reaction slurry is prepared by dispersing a lithium-containing compound, iron oxide, and an optional metal source in a dispersion medium containing water. Phosphoric acid is added to the first-reaction slurry at room temperature. Separately, a second-reaction slurry is prepared by dispersing a manganese-containing compound in a dispersion medium containing water. Phosphoric acid and a carboxylic acid are added to the second-reaction slurry heated to the specified temperature. Subsequently, after cooling the second-reaction slurry to which the phosphoric acid and the carboxylic acid have been added to room temperature, the first-reaction slurry to which phosphoric acid has been added and a carbon source are added simultaneously or sequentially to the second-reaction slurry to obtain an intermediate slurry.

Next, the pulverization step S11 is performed on the obtained intermediate slurry. As a result, a precursor slurry is obtained as the intermediate slurry after the pulverization step S11.

### Granulation Step

The granulation step S20 is a step of obtaining precursor particles by spray-drying the precursor slurry. The precursor particles are granulated particles formed by aggregation of solid components contained in the precursor slurry. Examples of a spraying method in spray drying include disc-type spraying, pressure nozzle spraying, pressure two-fluid nozzle spraying, and pressure four-fluid nozzle spraying. The spraying temperature in the spray drying is, for example, in a range of 180°C to 300°C.

### Calcination Step

The calcination step S30 is a step of obtaining LMFP by calcining the precursor particles obtained in the granulation step S20, and more specifically, a step of forming a crystal phase of LMFP. The calcination step S30 is also a step of forming the carbon coating 12 by carbonizing the carbon source contained in the precursor particles. The calcination temperature in the calcination step is, for example, in a range of 500°C to 750°C. The calcination time in the calcination step is, for example, in a range of one hour to twelve hours. The atmosphere in the calcination step is, for example, a non-oxidizing atmosphere. Examples of the non-oxidizing atmosphere include an inert atmosphere such as nitrogen (N₂) or argon (Ar), and a reducing atmosphere containing a reducing gas such as hydrogen (H₂).

When a carbon source is contained in the precursor slurry, the carbon source contributes to lowering the oxygen partial pressure during calcination. Lowering the oxygen partial pressure during calcination suppresses generation of a heterogeneous phase of LMFP in the granulated particles 10 obtained after calcination.

### Advantages

Operation and advantages of the present embodiment will now be described.
(1) The method for manufacturing a positive electrode material for a lithium-ion rechargeable battery includes the slurry preparation step S10 of obtaining a precursor slurry, the granulation step S20 of obtaining precursor particles by spray-drying the precursor slurry, and the calcination step S30 of calcining the precursor particles. The precursor slurry is a slurry containing lithium phosphate, a manganese-containing phosphate compound, iron oxide, and a dispersion medium, such that the proportion of the molar ratio of manganese relative to the total of the molar ratio of manganese and the molar ratio of iron is in a range of 70% to 90%. The manganese-containing phosphate compound is Mn54, Mn32, or a mixture thereof. In the slurry preparation step S10, the pulverization step S11 is performed on the intermediate slurry containing lithium phosphate, the manganese-containing phosphate compound, iron oxide, and the dispersion medium. In the pulverization step S11, lithium phosphate and the manganese-containing phosphate compound are pulverized together with iron oxide.

In the above-described configuration, in the pulverization step S11, lithium phosphate and the manganese-containing phosphate compound are pulverized together with iron oxide. Iron oxide has a higher hardness than lithium phosphate and the manganese-containing phosphate compound. Accordingly, iron oxide that has also been pulverized into fine particles collides with lithium phosphate and the manganese-containing phosphate compound, which have once been pulverized, whereby lithium phosphate and the manganese-containing phosphate compound are further finely pulverized. As a result, in the pulverization step S11, lithium phosphate and the manganese-containing phosphate compound are pulverized more finely.

The primary particle diameter of the obtained granulated particles 10 is reduced by performing the granulation step S20 and the calcination step S30 using powders of lithium phosphate and the manganese-containing phosphate compound, which have been pulverized more finely. Further, based on the reduced primary particle diameter of the granulated particles 10, solid-state diffusion within the granulated particles 10 is improved. As a result, battery characteristics such as capacity of the lithium-ion rechargeable battery are improved when used as a positive electrode material for a lithium-ion rechargeable battery.

(2) The slurry preparation step S10 includes the first reaction of producing lithium phosphate by reacting a lithium compound with phosphoric acid in a dispersion medium, and the second reaction of producing a manganese-containing phosphate compound by reacting a manganese compound with phosphoric acid in the dispersion medium.

According to the above-described configuration, lithium phosphate and a manganese-containing phosphate compound having desired compositions are readily obtained. In addition, manufacturing costs are reduced as compared with a case in which commercially available lithium phosphate and a manganese-containing phosphate compound are used.

(3) In the slurry preparation step, after the first reaction and after the second reaction, lithium phosphate and the manganese-containing phosphate compound are mixed with iron oxide.

The above-described configuration suppresses an increase in viscosity of reaction liquids after the first reaction and after the second reaction.

(4) At least one of the first reaction and the second reaction is a reaction accompanied by generation of carbon dioxide gas. After the first reaction and after the second reaction, lithium phosphate and the manganese-containing phosphate compound are mixed with at least one component other than lithium phosphate and the manganese-containing phosphate compound that is contained in the precursor slurry.

The above-described configuration performs a step of mixing a component after the first reaction and the second reaction, thereby promoting discharge of the generated carbon dioxide gas from the intermediate slurry. As a result, the calcination step S30 suppresses volume shrinkage of the granulated particles 10 caused by release of carbon dioxide gas from precursor particles containing carbon dioxide gas.

(5) In the first reaction, a metal compound other than lithium is added. The amount of the metal compound other than lithium is an amount such that the ratio (Li/MA) of the molar ratio of lithium (Li) relative to the total molar ratio (MA) of metal components constituting the metal compound is in a range of 1.0 to 1.1, and the ratio (P/MA) of the molar ratio of phosphorus (P) relative to the total molar ratio (MA) of the metal components constituting the metal compound is in a range of 1.0 to 1.1. According to the above-described configuration, in the first reaction, generation of by-products is suppressed and yield of lithium phosphate is increased.

(6) The precursor slurry contains a carbon source.

The above-described configuration produces the granulated particles 10 having the core 11 composed of LMFP and the carbon coating 12 formed on the surface of the core 11. Further, in the calcination step S30, the oxygen partial pressure in the system is lowered. This suppresses generation of a heterogeneous phase of LMFP in the granulated particles 10 obtained after calcination.

(7) The precursor slurry contains a carboxylic acid, and the pulverization step is performed in the presence of the carboxylic acid. The above-described configuration reduces the pore volume of the granulated particles 10.

(8) The precursor slurry contains a titanium compound. The above-described configuration further reduces the primary particle diameter of the granulated particles 10.

(9) The precursor slurry contains a magnesium compound. The above-described configuration reduces the resistance of the granulated particles 10.

(10) The manganese-containing phosphate compound is Mn54, or a mixture of Mn54 and Mn32. The above-described configuration obtains the granulated particles 10 having a small pore volume. In addition, the primary particle diameter of the granulated particles 10 is further reduced.

### Modifications

The above-described embodiment may be modified as follows. The above-described embodiment and the following modifications can be combined if the combined modifications remain technically consistent with each other.
- The intermediate slurry may be a slurry that does not contain lithium phosphate. That is, after the pulverization step S11 is performed on an intermediate slurry that does not contain lithium phosphate, separately pulverized lithium phosphate is added to the intermediate slurry after the pulverization step S11. In this case, the pulverization step S11 is a step of pulverizing the manganese-containing phosphate compound together with iron oxide.

### Examples

Specific examples of the above-described embodiment will now be described.

### Example 1

Lithium carbonate and manganese carbonate were dispersed in water at room temperature, and phosphoric acid was added dropwise thereto, thereby producing lithium phosphate and Mn32 as a manganese-containing phosphate compound. The Mn32 produced in this example was Mn₃(PO₄)₂·3H₂O. Next, Fe₂O₃, MgO, fructose, and citric acid were mixed into a reaction liquid containing lithium phosphate and Mn32 to obtain an intermediate slurry.

In the intermediate slurry, the proportion of the molar ratio of manganese relative to the total of the molar ratio of manganese and the molar ratio of iron was 80%. In the intermediate slurry, the ratio (P/T) of the molar ratio of phosphoric acid (P) relative to the total molar ratio (T) of specific metal elements (Mn, Fe, Mg) was 1.03. In the intermediate slurry, the ratio (Li/T) of the molar ratio of lithium (Li) relative to the total molar ratio (T) of the specific metal elements (Mn, Fe, Mg) was 1.05. In the intermediate slurry, the proportion of fructose relative to components other than water was 20 mass%. In the intermediate slurry, the proportion of citric acid relative to components other than water was 10 mass%.

Next, beads were added to the intermediate slurry, and solid components contained in the intermediate slurry were pulverized using a bead mill (MSC50, manufactured by Nippon Coke & Engineering Co., Ltd.), thereby obtaining a precursor slurry. Bead diameters and pulverization times are shown in Table 2 below. ZrO₂ beads (Mohs hardness: 8) were used as the beads. Pulverization using the bead mill was performed at a peripheral speed of 15 m/s.

Next, the precursor slurry was dried and granulated using a spray dryer (drying outlet temperature: 100°C) to obtain precursor particles, which are aggregates. The obtained precursor particles were heated at 650°C for six hours in an N₂ atmosphere, thereby obtaining granulated particles of Example 1.

### Example 2

Granulated particles of Example 2 were obtained in the same manner as in Example 1, except that lithium carbonate was replaced with lithium hydroxide in an amount equivalent in terms of lithium molar ratio.

### Example 3

Lithium carbonate and manganese carbonate were dispersed in water at 60°C, and phosphoric acid was added dropwise thereto, thereby producing lithium phosphate and Mn54 as a manganese-containing phosphate compound. The Mn54 produced in this example was Mn₅(HPO₄)₂(PO₄)₂(H₂O)₄. Next, Fe₂O₃, MgO, fructose, and citric acid were mixed into a reaction liquid containing lithium phosphate and Mn54 to obtain an intermediate slurry. Thereafter, granulated particles of Example 3 were obtained in the same manner as in Example 1.

### Example 4

Granulated particles of Example 4 were obtained in the same manner as in Example 3, in which lithium carbonate was replaced with lithium hydroxide in an amount equivalent in terms of lithium molar ratio.

### Example 5

Lithium carbonate and manganese carbonate were dispersed in water at 60°C, and phosphoric acid was added dropwise thereto, thereby producing lithium phosphate and Mn54 as a manganese-containing phosphate compound. The Mn54 produced in this example was Mn₅(HPO₄)₂(PO₄)₂(H₂O)₄. Next, Fe₂O₃, MgO, TiO₂, fructose, and citric acid were mixed into the reaction liquid containing lithium phosphate and the manganese-containing phosphate compound to obtain an intermediate slurry. Thereafter, granulated particles of Example 5 were obtained by performing the same treatment as in Example 1.

In the intermediate slurry, the proportion of the molar ratio of manganese relative to the total of the molar ratio of manganese and the molar ratio of iron was 80%. In the intermediate slurry, the ratio (P/T) of the molar ratio of phosphoric acid (P) relative to the total molar ratio (T) of specific metal elements (Mn, Fe, Mg, Ti) was 1.03. In the intermediate slurry, the ratio (Li/T) of the molar ratio of lithium (Li) relative to the total molar ratio (T) of the specific metal elements (Mn, Fe, Mg, Ti) was 1.05. In the intermediate slurry, the proportion of fructose relative to components other than water was 20 mass%. In the intermediate slurry, the proportion of citric acid relative to components other than water was 10 mass%.

### Example 6

Granulated particles of Example 6 were obtained in the same manner as in Example 5, except that lithium carbonate was replaced with lithium hydroxide in an amount equivalent in terms of lithium molar ratio.

### Example 7

Granulated particles of Example 7 were obtained in the same manner as in Example 3, except that bead diameters used in the pulverization treatment were changed.

### Example 8

Granulated particles of Example 8 were obtained in the same manner as in Example 4, except that bead diameters used in the pulverization treatment were changed.

### Example 9

Granulated particles of Example 9 were obtained in the same manner as in Example 7, except that citric acid was not added to the intermediate slurry.

### Example 10

Granulated particles of Example 10 were obtained in the same manner as in Example 8, except that citric acid was not added to the intermediate slurry.

### Comparative Example 1

Granulated particles of Comparative Example 1 were obtained in the same manner as in Example 1, except that Fe₂O₃ was replaced with Fe₂C₂O₄·2H₂O in an amount equivalent in terms of iron molar ratio.

### Comparative Example 2

Granulated particles of Comparative Example 2 were obtained in the same manner as in Example 2, except that Fe₂O₃ was replaced with Fe₂C₂O₄·2H₂O in an amount equivalent in terms of iron molar ratio.

### Comparative Example 3

Granulated particles of Comparative Example 3 were obtained in the same manner as in Example 2, except that Fe₂O₃ was replaced with FeSO₄·7H₂O in an amount equivalent in terms of iron molar ratio, and manganese carbonate was replaced with MnSO₄·5H₂O in an amount equivalent in terms of manganese molar ratio.

### Evaluation of Primary Particle Diameter of Granulated Particles

Primary particle diameters of granulated particles of each example and each comparative example were measured as follows. First, a SAXS method was used to calculate a particle diameter distribution of the primary particles under the assumption that the primary particles were spherical. An average particle diameter (D50) obtained from the particle diameter distribution was calculated and defined as the primary particle diameter. For the granulated particles of each Example and each Comparative Example, a particle diameter of the precursor particles before calcination was measured. The results are shown in table 2.

### Evaluation of Pore Volume of Granulated Particles

Pore volumes of granulated particles of each Example and each Comparative Example were measured as follows. Pores of the granulated particles were measured by using a specific surface area/pore distribution measuring device. A cumulative pore size distribution in a pore diameter range of 300 nm or less was obtained by analysis using the BJH method. A cumulative pore volume calculated from the obtained cumulative pore size distribution was defined as the pore volume of the granulated particles. The results are shown in Table 2.

### Evaluation of Battery Characteristics of Granulated Particles

A positive electrode mixture was applied to one surface of an aluminum foil having a thickness of 15 µm. By drying the applied positive electrode mixture, a positive electrode was produced in which a positive electrode active material layer was formed on one surface of a positive electrode current collector. As the positive electrode mixture, a slurry was used that contained, as solid components, the granulated particles (positive electrode active material) of each Example and each Comparative Example, acetylene black, and polyvinylidene fluoride (PVdF) at a mass ratio of solids of 90:5:5.

Using the produced positive electrode, a positive electrode half-cell was fabricated. A positive electrode (evaluation electrode) obtained by cutting the positive electrode into a 25 mm square, and a negative electrode obtained by cutting a metallic lithium foil having a thickness of 200 µm into a 27 mm square, were arranged with a separator interposed therebetween to form an electrode assembly cell. The electrode assembly cell was accommodated in a laminate outer package, a non-aqueous electrolyte was injected, and the outer package was sealed to obtain a half-cell for electrochemical testing. As the separator, a glass filter manufactured by Hoechst Celanese Corporation was used. As the nonaqueous electrolyte, a nonaqueous electrolyte was used in which lithium hexafluorophosphate was dissolved at a concentration of 1 M in a mixed solvent obtained by mixing ethylene carbonate, ethyl methyl carbonate, and dimethyl carbonate at a volume ratio of 3:3:4.

The produced positive electrode half-cell was charged to 4.3 V and discharged to 3.0 V at 25°C under a constant current of 0.05 C. A discharge capacity at that time was measured. The results are shown in Table 2.

**[Table 2]**

| | **Raw Materials of Precursor Slurry and Types of Manganese-Containing Phosphate Compounds** | | | | | | | | **Pulverization Step** | | **Primary Particle Diameter** | | **Pore Volume (cm³/g)** | **Discharge Capacity (mAh/g)** |
|---|---|---|---|---|---|---|---|---|---|---|---|---|---|---|
| | **Li Source** | **Mn Source** | **Fe Source** | **Ti Source** | **Mg Source** | **Fructose (wt%)** | **Citric Acid (wt%)** | **Type** | **Bead Diameter (mm)** | **Duration of Pulverization (min)** | **Before Calcination (nm)** | **After Calcination (nm)** | | |
| **Comparative Example1** | **Li₂CO₃** | **MnCO₃ (4)** | **FeC₂O₄ •2H₂O (1.5)** | **-** | **MgO (4)** | **20** | **10** | **Mn32 (5)** | **0.1** | **4** | **32.4** | **62** | **0.268** | **141.7** |
| **Comparative Example2** | **LiOH** | **MnCO₃ (4)** | **FeC₂O₄ • 2H₂O (1.5)** | **-** | **MgO (4)** | **20** | **10** | **Mn32 (5)** | **0.1** | **4** | **28.7** | **55.7** | **0.252** | **142** |
| **Comparative Example3** | **LiOH** | **MnCO₄ •5H₂O (2.5)** | **FeSO₄ •7H₂O (2)** | **-** | **MgO (4)** | **20** | **10** | **Mn32 (5)** | **0.1** | **4** | **33.4** | **61.7** | **0.277** | **139.8** |
| **Example 1** | **Li₂CO₃** | **MnCO₃ (4)** | **Fe₂O₃ (5,5)** | - | **M90 (4)** | **20** | **10** | **Mn32 6)** | **0.1** | **4** | **25.1** | **48.6** | **0.234** | **145.1** |
| **Example 2** | **LiOH** | **MnCO₃ (4)** | **Fe₂O₃ (5,5)** | - | **MgO (4)** | **20** | **10** | **Mn32 (5)** | **0.1** | **4** | **22.9** | **46.6** | **0.222** | **145.3** |
| **Example 3** | **Li₂CO₃** | **MnCO₃ (4)** | **Fe₂O₃ (5,5)** | - | **MgO (4)** | **20** | **10** | **Mn54 6)** | **0.1** | **4** | **20.2** | **40.2** | **0.166** | **145.4** |
| **Example 4** | **LiOH** | **MnCO₃ (4)** | **Fe₂O₃ (5,5)** | | **MgO (4)** | **20** | **10** | **MnS4 6)** | **0.1** | **4** | **14** | **38.7** | **0.144** | **146.5** |
| **Example 5** | **Li₂CO₃** | **MnCO₃ (4)** | **Fe₂O₃ (5,5)** | **TiO₂ (7)** | **MgO (4)** | **20** | **10** | **Mn54 (5)** | **0.1** | **4** | **13.3** | **36.2** | **0.133** | **147.1** |
| **Example 6** | **LiOH** | **MnCO₃ (4)** | **Fe₂O₃ (5,5)** | **TiO₂ (7)** | **MgO (4)** | **20** | **10** | **MnS4 6)** | **0.1** | **4** | **12.2** | **30.5** | **0.115** | **147.2** |
| **Example 7** | **Li₂CO₃** | **MnCO₃ (4)** | **Fe₂O₃ (5,5)** | - | **MgO (4)** | **20** | **10** | **Mn54 (5)** | **0.05** | **4** | **13.5** | **27.6** | **0.097** | **147.5** |
| **Example 8** | **LiOH** | **MnCO₃ (4)** | **Fe₂O₃ (5,5)** | - | **MgO (4)** | **20** | **10** | **Mn54 6)** | **0.05** | **4** | **11.5** | **23.8** | **0.087** | **147** |
| **Example 9** | **Li₂CO₃** | **MnCO₃ (4)** | **Fe₂O3 (5,5)** | - | **M90 (4)** | **30** | **0** | **Mn54 6)** | **0.05** | **4** | **14.5** | **30.2** | **0.19** | **147.3** |
| **Example 10** | **LiOH** | **MnCO₃ (4)** | **Fe₂O₃ (5,5)** | - | **MgO (4)** | **30** | **0** | **Mn54 (5)** | **0.05** | **4** | **12.6** | **28.1** | **0.188** | **147.6** |

The numerical va;ues shown in parentheses in Table 2 represent the Mohs hardess of the substance indicated above each numerical value.

### Examples 1, 2 and Comparative Examples 1 to 3

Examples 1 and 2 are examples in which an Fe source harder than Mn32, which is a manganese-containing phosphate compound, was used, whereas Comparative Examples 1 to 3 are examples in which an Fe source softer than Mn32 was used. As shown in Table 2, the primary particle diameters before calcination and after calcination are markedly smaller in Examples 1 and 2 than in Comparative Examples 1 to 3. In addition, when the granulated perticles of Examples 1 and 2 are used as a positive electrode material, the discharge capacity is higher than when the granulated particles of Comparative Examples 1 to 3 are used.

This result shows that, when pulverizing the manganese-containing phosphate compound, pulverization together with an Fe source harder than the manganese-containing phosphate compound enables the manganese-containing phosphate compound to be pulverized more finely. Further, the result shows that, by performing granulation and calcination of precursor particles using the more finely pulverized powder of the manganese-containing phosphate compound, the primary particle diameter of the resulting granulated particles are reduced. Based on the relatively small primary particle diameter of the granulated particles, solid-state diffusion within the granulated particles is improved, and as a result, an improvement effect in discharge capacity is obtained.

In addition, the pore volume of the granulated particles of Examples 1 and 2 is smaller than that of Comparative Examples 1 to 3. This result is considered to be attributable to granulation and calcination of the precursor particles using the more finely pulverized powder of the manganese-containing phosphate compound. The pore volume of the granulated particles is considered not to have a significant influence on discharge capacity. The reason for this will be described later.

### Examples 3 and 4

Examples 3 and 4 are examples in which the manganese-containing phosphate compound is Mn54. The primary particle diameters before calcination and after calcination in Examples 3 and 4 are smaller than those in Examples 1 and 2. Accordingly, it is found that, even when the manganese-containing phosphate compound is Mn54, an effect of reducing the primary particle diameter of the granulated particles is obtained. In addition, the pore volume of Examples 3 and 4 is significantly reduced as compared with Examples 1 and 2. This result shows that use of Mn54 as the manganese-containing phosphate compound is effective when producing granulated particles having a relatively small pore volume.

### Examples 5 and 6

Examples 5 and 6 are examples in which titanium oxide, which is a Ti source, was added. The primary particle diameters before calcination and after calcination, as well as the pore volumes, of Examples 5 and 6 are smaller than those of Examples 3 and 4, in which titanium oxide was not added. In addition, the discharge capacities of Examples 5 and 6 are higher than those of Examples 3 and 4. This result shows that addition of titanium oxide is effective when producing granulated particles having a relatively small primary particle diameter or a relatively small pore volume.

### Examples 7 to 10

Examples 7 and 8 are examples in which citric acid was added, whereas Examples 9 and 10 are examples in which citric acid was not added. The pore volumes of the granulated particles of Examples 7 and 8 are significantly reduced as compared with Examples 9 and 10. This result shows that addition of citric acid is effective when producing granulated particles having a relatively small pore volume. In addition, the discharge capacities of Examples 7 and 8 are substantially the same as those of Examples 9 and 10. This result shows that the pore volume of the granulated particles does not have a significant influence on discharge capacity.

### REFERENCE SIGNS LIST

10) Granulated Particle
11) Core
11a) Primary Particle
11b) Pore
12) Carbon Coating

## Claims

1. A method for manufacturing a positive electrode material for a lithium-ion rechargeable battery, comprising:
a slurry preparation step of obtaining a precursor slurry containing lithium phosphate, a manganese-containing phosphate compound, iron oxide, and a dispersion medium;
a granulation step of obtaining precursor particles that are agglomerates by spray-drying the precursor slurry; and
a calcination step of obtaining olivine-type lithium manganese iron phosphate by calcining the precursor particles, wherein
in the precursor slurry, a proportion of a molar ratio of manganese relative to a total of a molar ratio of manganese and a molar ratio of iron is in a range of 70% to 90%,
the manganese-containing phosphate compound is Mn₅(HPO₄)₂(PO₄)₂(H₂O)_{4,}, Mn₅(HPO₄)₂(PO₄)_{2,}, Mn₃(PO₄)₂·3H₂O, Mn₃(PO₄)₂, or a mixture thereof, and
the slurry preparation step includes a pulverization step of pulverizing the manganese-containing phosphate compound together with the iron oxide.

2. The method for manufacturing a positive electrode material for a lithium-ion rechargeable battery according to claim 1, wherein the slurry preparation step includes: a first reaction of producing the lithium phosphate by reacting a lithium compound with phosphoric acid in the dispersion medium; and a second reaction of producing the manganese-containing phosphate compound by reacting a manganese compound with phosphoric acid in the dispersion medium.

3. The method for manufacturing a positive electrode material for a lithium-ion rechargeable battery according to claim 2, wherein, in the slurry preparation step, after the first reaction and after the second reaction, the lithium phosphate and the manganese-containing phosphate compound are mixed with the iron oxide.

4. The method for manufacturing a positive electrode material for a lithium-ion rechargeable battery according to claim 2 or 3, wherein
at least one of the first reaction or the second reaction is a reaction accompanied by generation of carbon dioxide gas, and
after the first reaction and after the second reaction, the lithium phosphate and the manganese-containing phosphate compound are mixed with at least one component other than the lithium phosphate and the manganese-containing phosphate compound that are contained in the precursor slurry.

5. The method for manufacturing a positive electrode material for a lithium-ion rechargeable battery according to any one of claims 2 to 4, wherein
in the first reaction, a metal compound other than lithium is added, and
an amount of the metal compound added is such that:
a ratio (Li/MA) of a molar ratio of lithium (Li) to a total molar ratio (MA) of metal components constituting the metal compound is in a range of 1.0 to 1.1; and
a ratio (P/MA) of a molar ratio of phosphorus (P) to the total molar ratio (MA) of the metal components constituting the metal compound is in a range of 1.0 to 1.1.

6. The method for manufacturing a positive electrode material for a lithium-ion rechargeable battery according to any one of claims 1 to 5, wherein the precursor slurry contains a carbon source.

7. The method for manufacturing a positive electrode material for a lithium-ion rechargeable battery according to any one of claims 1 to 6, wherein
the precursor slurry contains a carboxylic acid, and
the pulverization step is performed in a presence of the carboxylic acid.

8. The method for manufacturing a positive electrode material for a lithium-ion rechargeable battery according to any one of claims 1 to 7, wherein the precursor slurry contains a titanium compound.

9. The method for manufacturing a positive electrode material for a lithium-ion rechargeable battery according to any one of claims 1 to 8, wherein the precursor slurry contains a magnesium compound.
